Europäisches Patentamt

European Patent Office

Office européen des brevets

(19)

(11) **EP 1 484 666 A2**

(12) **EUROPÄISCHE PATENTANMELDUNG**

(43) Veröffentlichungstag:
08.12.2004 Patentblatt 2004/50

(51) Int Cl.⁷: **G06F 3/033**

(21) Anmeldenummer: **04008251.3**

(22) Anmeldetag: **05.04.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **04.06.2003 DE 10325284**

(71) Anmelder: **3Dconnexion GmbH**
**82229 Seefeld (DE)**

(72) Erfinder:
• **Gombert, Bernd**
**82284 Grafrath (DE)**
• **Hildebrandt, Axel, Dr.**
**82272 Moorenweis-Eismerszell (DE)**

(74) Vertreter: **Rupp, Christian, Dipl.Phys. et al**
**Mitscherlich & Partner**
**Patent- und Rechtsanwälte**
**Sonnenstrasse 33**
**80331 München (DE)**

(54) **Multidimensionales Eingabegerät zur Navigation und Selektion von virtuellen Objekten**

(57) Ein Computer (114) mit einer Anzeigeeinheit (116), auf der Objekte (110') in einer von mehreren diskreten Detailtiefenstufen $(D_1,..., D_n)$ der Darstellung angezeigt werden, wird mit Ansteuersignalen versorgt, die durch ein Eingabegerät (102) mit wenigstens drei Freiheitsgraden $(x, y, z, \varphi_x, \varphi_y, \varphi_z)$ erzeugt sind. Ansteuer-signalen in zwei Freiheitsgraden $(x, y, z, \varphi_x, \varphi_y, \varphi_z)$ zur Navigation einer Marke (110") oder eines Objekts (110') auf der Anzeigeeinheit (116) und Ansteuersignale eines dritten Freiheitsgrads $(x, y, z, \varphi_x, \varphi_y, \varphi_z)$ zur Wahl einer der mehreren diskreten Detailtiefenstufen $(D_1,..., D_n)$ der Darstellung ausgewertet.

Fig. 1

EP 1 484 666 A2

**Beschreibung**

Die vorliegende Erfindung bezieht sich auf ein mehrdimensionales Eingabegerät. Weiterhin betrifft die Erfindung die Verwendung eines solchen 3D-Geräts für die Erzeugung von Ansteuersignalen, die zur Selektion, Positions, Bewegungs- bzw. Zoomsteuerung bei der Bearbeitung virtueller Objekte bzw. bei der Echtzeit-Navigation derartiger Objekte benutzt werden.

Ein Beispiel für einen Kraft-/Momenten-Sensor, der die Translations- und Rotationsbewegungen, wie sie von den durch die menschliche Hand aufgebrachten Kräften und Momenten erzeugt werden, mit Hilfe von Dehnungsmessstreifen (DMS) direkt in translatorische und/oder rotatorische Bewegungsgeschwindigkeiten eines zu steuernden Objekts umsetzt, ist die in der europäischen Patentschrift EP 0 108 348 offenbart. Die darin beschriebene Erfindung bezieht sich auf eine Einrichtung zur Durchführung eines Verfahren zum Programmieren von Bewegungen und ggf. Bearbeitungskräften bzw. -momenten eines Roboters oder Manipulators.

Ein vergleichbarer Sensor ist auch in der Offenlegungsschrift DE 36 11 337 A1, der europäischen Patentschrift EP 0 240 023 sowie der US-Patentschrift 4,785,180 offenbart. Das Basismesssystem besteht aus einer lichtemittierenden Diode (LED), einer Schlitzblende und einem außen gegenüber der Schlitzblende angebrachten linearen Positionsdetektor (PSD), der relativ zum Innensystem beweglich ist.

Aus der Patentschrift US-A-5,757,360 ist ein eiförmiges 3D-Steuergerät für Computer bekannt, das durch eine Hand des Benutzers frei im Raum bewegt werden kann, seine momentanen Positionen, Bewegungsrichtungen, Geschwindigkeiten und Beschleunigungen ermittelt und diese kinematischen Daten drahtlos zu einem Computer überträgt.

Aus der europäischen Patentschrift EP 0 979 990 A2 ist bekannt, einen Kraft-/Momenten-Sensor zum Steuern von Bedienelementen eines realen oder virtuellen Misch- bzw. Steuerpults zu verwenden, z.B. um Farb-, Licht- und/ oder Tonkompositionen zu kreieren und zu gestalten.

PROBLEME HERKÖMMLICHER LÖSUNGEN

Im CAD-Bereich wird mit einer Arbeitshand an einem Zeigegerät, wie z.B. einer 2D-Maus oder einem Grafiktablett, gearbeitet. Dies hat zur Folge, dass stets zwischen

- einem "Bewegungsmodus" (z.B. dem Navigieren einer Positionsmarke zum Verschieben oder Drehen eines virtuellen Werkstücks auf dem Bildschirm eines Monitors) und
- einem "Bearbeitungsmodus" (etwa dem Selektieren einzelner Eckpunkte oder Kanten zum Vergrößern einer rechteckförmigen Fläche des virtuellen Werkstücks)

hin und her gewechselt werden muss, was zu einer ständigen Unterbrechung des natürlichen Denk- und Arbeitsablaufs führt.

Reicht der auf einem Schreibtisch zur Verfügung stehende Platz zur Bewegung der 2D-Maus beim Scrollen eines Scrollbalkens bzw. beim Navigieren der zu steuernden Objekte nicht aus, muss der natürliche Bewegungsablauf zum Steuern dieser Objekte unterbrochen werden. Die mit der Maus durchzuführenden Scroll- bzw. Navigationsoperationen müssen dann u.U. durch mehrfache Nachgreifbewegungen der Arbeitshand neu angesetzt werden ("Nachgreifen").

Vergleichbare Probleme gibt es auch bei der Navigation in baumartigen Verzeichnisstrukturen auf einem Bildschirm. Zuerst muss nämlich gemäss dem Stand der Technik mittels eines Eingabegeräts eine Markierung an eine gewünschte Stelle der Verzeichnisstruktur navigiert werden. Dies erfolgt üblicherweise mittels Aktivierung eines randseitigen sog. Scroll-Balkens. Dann muss der Cursor mittels des Eingabegeräts von dem Scrollbalken zu der angewählten Stelle der Verzeichnisstruktur bewegt werden, um neue Verzeichnissebenen zu öffnen. Dieser Positionswechsel unterbricht den natürlichen Arbeitsfluss.

AUFGABE DER VORLIEGENDEN ERFINDUNG

Ausgehend von dem oben genannten Stand der Technik, liegt der vorliegenden Erfindung die Aufgabe zugrunde, eine Technik bereitzustellen, die es erlaubt, ohne Positionswechsel der Hand des Benutzers Navigation und Aktivierungsvorgänge bspw. zur Öffnung/Schliesen diskreter Detail/Verzeichnisebenen auszuführen.

Diese Aufgabe wird erfindungsgemäß durch die Merkmale der unabhängigen Ansprüche gelöst. Ausführungsbeispiele, die den zentralen Gedanken der Erfindung in vorteilhafter Weise weiterbilden, sind in den abhängigen Unteransprüchen definiert.

ZUSAMMENFASSENDE DARSTELLUNG DER VORLIEGENDEN ERFINDUNG

Die Erfindung bezieht sich auf ein in drei Dimensionen auslenkbares, manuell bedienbares Eingabe-, Steuer- und/oder Manipulationsgerät sowie auf die Verwendung eines solchen Geräts für die Erzeugung von Ansteuersignalen, die zur Selektion, Positions-, Bewegungs- bzw. Zoomsteuerung bei der Bearbeitung von virtuellen 3D-Objekten bzw. bei der Echtzeit-Navigation dieser Objekte durch eine virtuelle Szene benötigt werden.

Darüber hinaus bezieht sich die Erfindung auf die Übertragung dieser Ansteuersignale zu einer Recheneinrichtung mit einer daran angeschlossenen Anzeigevorrichtung zur Visualisierung der gesteuerten Bewegungsabläufe. Das Eingabe, Steuer- und/oder Manipulationsgerät verfügt erfindungsgemäß über ein manuell zu betätigendes Bedienteil, welches in translatorischen *(x,* y, z) und/oder rotatorischen Freiheitsgraden ($\varphi_x$, $\varphi_y$, $\varphi_z$) auslenkbar ist.

Erfindungsgemäß ist vorgesehen, dass die zu steuernden 3D-Objekte mit Hilfe des manuell zu betätigenden 3D-Geräts durch Manipulation eines Kraft-/ Momenten-Sensors in den sechs oben genannten Freiheitsgraden beliebig bewegt werden können. Selektion und Navigation der zu steuernden Objekte erfolgen dabei erfindungsgemäß durch translatorische ($\Delta x$, $\Delta y$, $\Delta z$) bzw. rotatorische Auslenkung ($\Delta\varphi_x$, $\Delta\varphi_y$, $\Delta\varphi_z$) desselben Bedienteils in mindestens zwei verschiedenen, vom Hersteller oder dem Anwender vorher festgelegten Raumfreiheitsgraden ($x, y, z, \varphi_x, \varphi_y, \varphi_z$). Durch Auslenkung des 3D-Geräts in einem dritten Freiheitsgrad kann eine bestimmte diskrete Detailtiefenstufe ($D_1,..., D_n$) aus einer Zoomfaktorenliste ausgewählt werden.

KURZBESCHREIBUNG DER ZEICHNUNGEN

Weitere Eigenschaften, Merkmale, Vorteile und Zweckmäßigkeiten der zugrunde liegenden Erfindung ergeben sich aus den untergeordneten abhängigen Ansprüchen sowie aus der folgenden Beschreibung einiger Ausführungsbeispiele der Erfindung, welche in den folgenden Zeichnungen abgebildet sind. Hierbei zeigt

Fig. 1    ein erfindungsgemäßes Ausführungsbeispiel eines Systems zur Erzeugung von Steuersignalen,

Fig. 2a    ein Flussdiagramm zur Selektion virtueller Objekte, Durchführung einer Maßstabsskalierung des definierten Bildausschnitts und Verschieben des Bildausschnitts,

Fig. 2b    ein Flussdiagramm zur Veranschaulichung der Vorgänge, die im Rahmen einer Unterprogramm-Routine zur Selektion eines virtuellen Objekts bzw. einer Gruppe solcher Objekte ablaufen,

Fig. 2c    ein Flussdiagramm zur Veranschaulichung der im Rahmen einer Unterprogramm-Routine zum Navigieren der Positionsmarke (des Mauszeigers) durch eine Liste vorgegebener Zoomfaktoren ablaufenden Vorgänge,

Fig. 2d    ein Flussdiagramm zur Veranschaulichung der im Rahmen einer Unterprogramm-Routine zur Verschiebung eines rechteckförmigen Bildausschnitts der dargestellten virtuellen Szene sowie der darin enthaltenen virtuellen Objekte ablaufenden Vorgänge,

Fig. 3a    ein Flussdiagramm zur Veranschaulichung der Vorgänge, die beim Navigieren einer Positionsmarke durch eine zweidimensionale Verzeichnisstruktur und Selektieren darin enthaltener Verzeichnisse bzw. Dateien,

Fig. 3b    ein Flussdiagramm der Vorgänge, die im Rahmen einer Unterprogramm-Routine zum Navigieren der Positionsmarke zu einem Verzeichnis bzw. einer Datei, das/die in der zweidimensionalen Verzeichnisstruktur die gleiche Hierarchiestufe wie das zuletzt selektierte Verzeichnis bzw. die zuletzt selektierte Datei hat, ablaufen,

Fig. 3c    ein Flussdiagramm der Vorgänge, die im Rahmen einer Unterprogramm-Routine zum Navigieren der Positionsmarke zu einem Verzeichnis bzw. einer Datei, das/die in der zweidimensionalen Verzeichnisstruktur eine höhere oder niedrigere Hierarchiestufe als das zuletzt selektierte Verzeichnis bzw. die zuletzt selektierte Datei hat, ablaufen,

Fig. 3d    ein Flussdiagramm der Vorgänge, die im Rahmen einer Unterprogramm-Routine zum Navigieren der Positionsmarke durch eine Liste möglicher Ansichts- bzw. Anordnungsarten und Wechseln der Darstellungsansicht bzw. Anordnung der im zweiten Teilfenster einer grafischen Benutzeroberfläche dargestellten Unterverzeichnisse bzw. Dateien ablaufen.

DETAILLIERTE BESCHREIBUNG DER ERFINDUNG

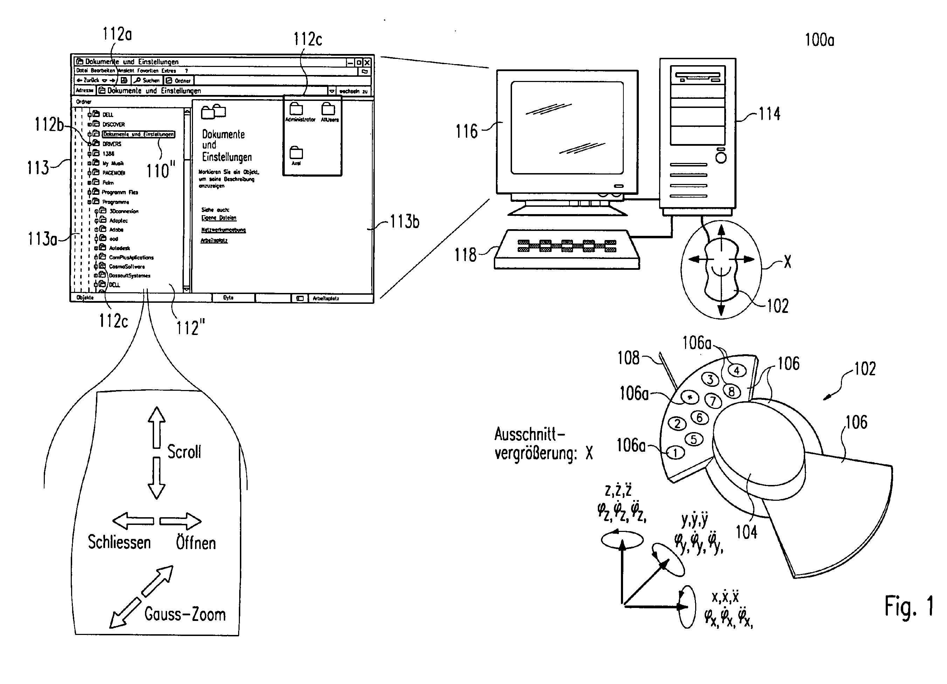

Im Folgenden werden die Funktionen der in einzelnen Ausführungsbeispielen der vorliegenden Erfindung verwendeten Baugruppen und Verfahrensschritte beschrieben. Dabei sollen zunächst der Aufbau und die mechanischen Bestandteile eines 3D-Eingabegeräts 102 gemäß einem Ausführungsbeispiel der vorliegenden Erfindung erläutert werden. Die Bedeutung der mit Bezugszeichen versehenen Symbole in den Figuren 1 bis 3d kann der beigefügten Bezugszeichenliste entnommen werden.

Das erfindungsgemäße mehrdimensionsionale, (hier 3D-)Eingabegerät 102 ist bei entsprechender Ansteuerung durch den Nutzer dazu in der Lage, Ansteuersignale 108 in sechs voneinander unabhängigen Raumfreiheitsgraden zu erzeugen. Diese umfassen drei translatorische Freiheitsgrade, die im Folgenden als *x*, *y* und *z* bezeichnet werden, sowie drei rotatorische Freiheitsgrade, im Folgenden $\varphi_x$, $\varphi_y$ und $\varphi_z$ genannt, welche Drehbewegungen von virtuellen Objekten 110' um die *x*-, *y*- und/oder *z*-Achse eines dreidimensionalen kartesischen Koordinatensystems mit paarweise orthogonalen Achsen bezeichnen. Auslenkungen des Bedienteils 104 in den oben genannten sechs Raumfreiheitsgraden werden als Ansteuersignale zur Navigation virtueller Objekte 110' bzw. Positionsmarken 110" durch eine auf einem Computer-Bildschirm 116 visualisierte virtuelle Szene 112' bzw. 112" interpretiert.

Das in Fig. 1 abgebildete 3D-Eingabegerät 102 umfasst bpsw. die folgenden Komponenten:

- ein Bedienteil 104, das mit wenigstens einem Finger oder einer Hand des Benutzers manipuliert werden kann,

- eine Basisplatte 106, auf der das Bedienteil 104 in drei Achsen beweglich gelagert ist, um zu jedem Zeitpunkt *t*

$$\text{den Kraftvektor } \vec{F}(t) := F_x(t)\cdot\vec{e}_x + F_y(t)\cdot\vec{e}_y + F_z(t)\cdot\vec{e}_z$$

und

$$\text{den Momentvektor } \vec{M}(t) := M_x(t)\cdot\vec{e}_x + M_y(t)\cdot\vec{e}_y + M_z(t)\cdot\vec{e}_z$$

mit den Komponenten $F_x(t)$, $F_y(t)$, $F_z(t)$ bzw. $M_x(t)$, $M_y(t)$, $M_z(t)$ in Richtung der Einheits- bzw. Basisvektoren $\vec{e}_x$, $\vec{e}_y$ und $\vec{e}_z$ eines dreidimensionalen kartesischen Koordinatensystems mit den Achsen *x*, *y* und *z* aufzunehmen sowie

- optional Funktionstasten 106a mit programmierten Standardfunktionen, wobei weitere Funktionen vom Benutzer individuell programmiert werden können. Diese Ansteuersignale werden über Schnittstelle an einen Rechner 114 übergeben und von der zugehörigen Treibersoftware in entsprechende Vorgänge aud einem mit dem Rechner verbundenen Monitor umgesetzt.

In Fig. 1 ist ein Ausführungsbeispiel 100a dargestellt, das im übrigen in gleicher Weise im Rahmen einer CAD-Anwendung angewendet werden kann, bei der Objekte, bspw. eine perspektivische Ansicht eines von einem Computer 114 mit Hilfe einer CAD-Applikation generierten dreidimensionalen Werkstücks auf dem Monitor angezeigt werden.

Erfindungsgemäß ist vorgesehen, dass die Selektion eines Objekts oder einer Gruppe mehrerer Objekte durch Festlegung eines rechteckförmigen Bildausschnitts der dargestellten Szene bei gleichbleibendem Maßstab durch mindestens vier Auslenkungen des Bedienelements 104 in mindestens zwei vorher geeignet festgelegten Freiheitsgraden (*x*, *y*, *z*, $\varphi_x$, $\varphi_y$, $\varphi_z$) zur Vorgabe der Position und Größe des Bildausschnitts erfolgt.

Durch Auslenkung des Bedienteils 104 in einem dritten Freiheitsgrad wird die Detailtiefenstufe der Darstellung angesteuert. Vorstellbar ist auch eine zusätzliche Maßstabsskalierung der kompletten Szene mit den darin enthaltenen Objekten durch eine erste Auslenkung des Bedienelements in einem geeignet vorgegebenen Freiheitsgrad zur Navigation durch eine Liste vorgegebener diskreter Detailtiefenstufen $D_1,...,D_n$ sowie eine zweite Auslenkung des Bedienelements 104 in einem anderen Freiheitsgrad zur Selektion einer bestimmten Detailtiefenstufe.

Gemäß dem in Fig. 1 konkret abgebildeten Ausführungsbeispiel 100c der vorliegenden Erfindung ist die Verwendung der vorstehend genannten Verfahren zum Navigieren einer Positionsmarke 110", Selektieren, Öffnen und/ oder Schließen von Verzeichnissen 112a,b,c und/oder Dateien in einer zweidimensionalen, baumförmigen hierarchischen Verzeichnisstruktur 112" vorgesehen. Diese Verzeichnisstruktur verfügt dabei über ein Stammverzeichnis 112a und einer Anzahl von diesem Stammverzeichnis 112a oder einem seiner Unterverzeichnisse 112b abzweigenden weiteren Unterverzeichnissen 112c niedrigerer Hierarchiestufen sowie darin gespeicherter Dateien. Die Verzeichnisstruktur 112" wird hierbei in einem ersten Teilfenster 113a einer grafischen Benutzeroberfläche 113 dargestellt, während die in einem selektierten Verzeichnis 112a,b,c enthaltenen Unterverzeichnisse 112b,c und/oder Dateien in einem zweiten Teilfenster 113b der grafischen Benutzeroberfläche 113 angezeigt werden und mit Hilfe grafischer Symbole, Namen, Typbezeichnungen, Größenangaben und/oder Erstellungsdaten eindeutig identifiziert und sortiert werden können.

Ein Wechsel der Darstellungsansicht und/oder Anordnung der in dem zweiten Teilfenster 113b angezeigten Unterverzeichnisse 112b,c und/oder Dateien hinsichtlich ihres Namens, ihres Typs, ihrer Größe bzw. ihres Erstellungsdatums erfolgt dabei erfindungsgemäß durch eine Auslenkung des Bedienelements 104 zur Selektion einer bestimmten Ansichts- bzw. Anordnungsart.

Diese Navigation kann also bspw, in einem Verzeichnisbaum des "Windows-Explorer" ausgeführt werden.

Durch das erfindungsgemässe Verfahren lässt sich sowohl der dargestellte Ausschnitt des Verzeichnisbaums nach oben und unten verschieben (siehe die Pfeile "Scroll" in Fig. 1), als auch Unterverzeichnisse öffnen und schließen (Pfeile "Öffnen bzw. "Schliessen" in Fig.1).

Durch Betätigung eiens weiteren Freiheitsgrads des Eingabegeräts (diagonale Pfeile "Gauss-Zoom) können optional Unterverzeichnis entsprechend eines so genannten "Gauss-Zooms" geöffnet bzw. geschlossen. In Anlehnung an die Verteilung der Sinneszellen im menschlichen Auge und der damit verbundenen hohen Auflösung des fokussierten Objektes bei kontinuierlicher Abnahme in Richtung der Peripherie,wird auch hier eine Öffnung der Unterverzeichnisse mit unterschiedlicher Öffnungstiefe vorgenommen. Für das aktuell im Fokus liegende Verzeichnis werden somit mehrere Unterverzeichnisse geöffnet, wohingegen die Öffnungstiefe in benachbarten Verzeichnissen sukzessive abnimmt.

Ausgehend von der Mitte des Fokus kann die Öffnungstiefe dabei im wesentlichen den Verlauf einer (diskretisierten) Gaussverteilung einnehmen. Auf jeden Fall ist also der einstellbare Zoomfaktor eine Funktion des Abstands vom Zentrum des Fokus.

Gegenstand der Erfindung ist ferner ein Softwaretreiber-Programmpaket, das die in der Recheneinrichtung 114 von einem 3D-Eingabegerät 102 empfangenen Ansteuersignale in grafisch darstellbare Bewegungsabläufe selektierter Objekte 110', 110" und/oder ausführbare Steuerbefehle bei Betrieb auf der Recheneinrichtung 114 umsetzt, wobei wenigstens ein Freiheitsgrad zur Selektion von einer von mehreren diskreten Detail- bzw. Verzeichnisebenen ausgewertet wird.

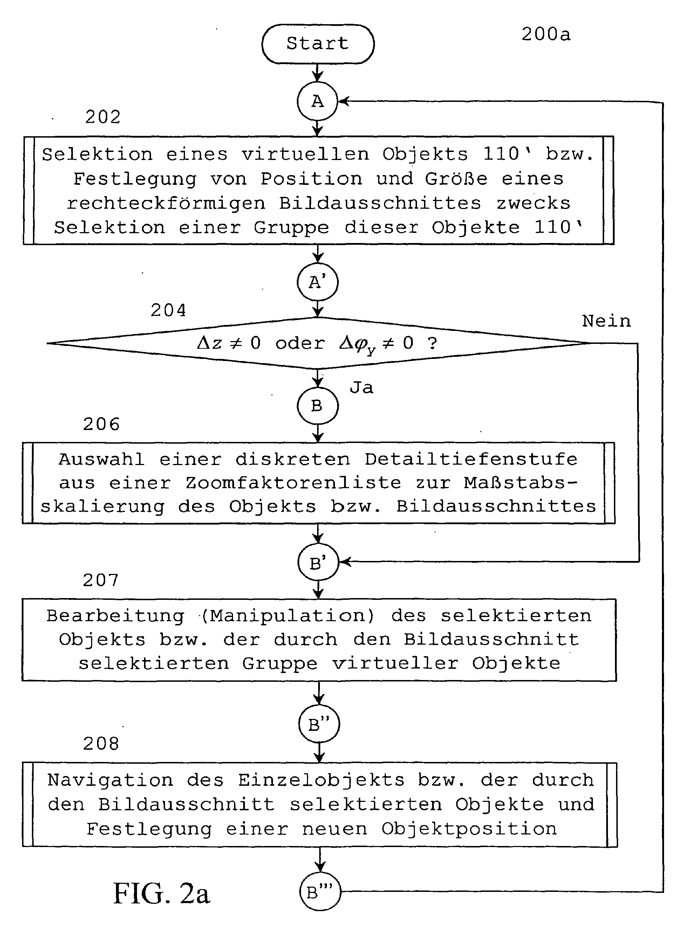

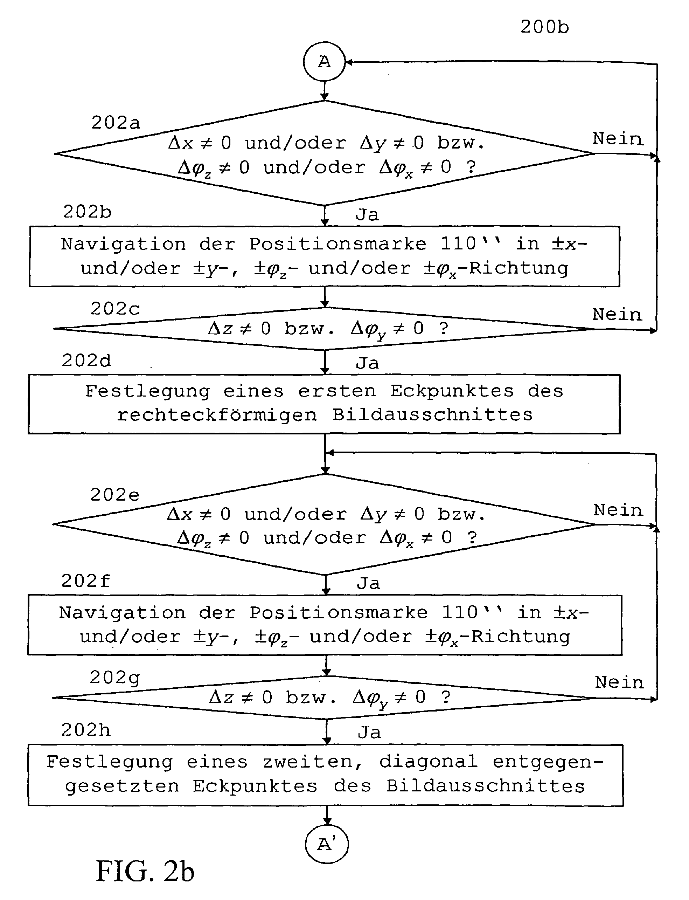

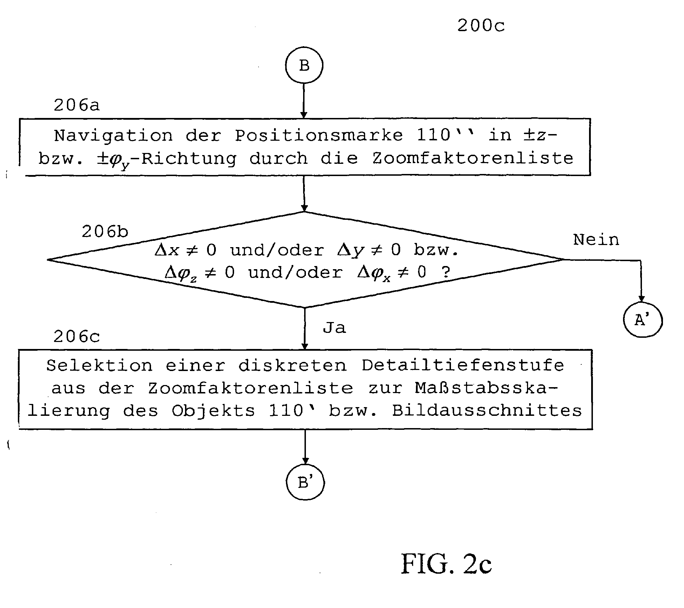

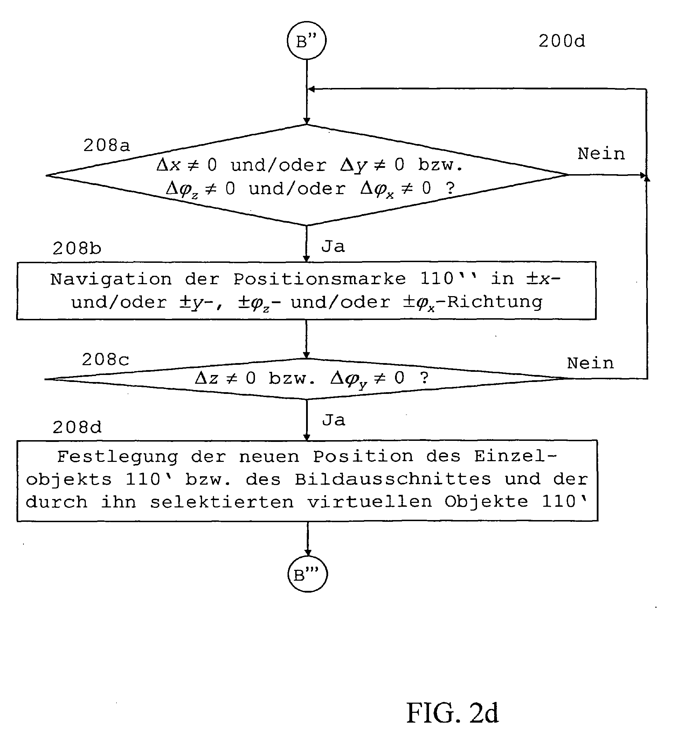

Die Abläufe im Umfeld einer CAD-Anwendung werden nunmehr unter Zuhilfenahme der Fig. 2 erläutert.

In Fig. 2a ist ein Flussdiagramm 200a zur Festlegung eines Bildausschnitts der dargestellten virtuellen Szene zur Selektion virtueller Objekte 110', zur Durchführung einer Maßstabsskalierung des definierten Bildausschnitts sowie zum Verschieben des Bildausschnitts mit Hilfe von Auslenkungen des Kraft-/Momentensensors 104 in verschiedenen translatorischen ($x$, $y$, $z$) und/oder rotatorischen Freiheitsgraden ($\varphi_x$, $\varphi_y$, $\varphi_z$) - eingebunden in eine Endlosschleife - nach einem Ausführungsbeispiel der vorliegenden Erfindung dargestellt.

Fig. 2b, 2c bzw. 2d zeigen Flussdiagramme 200b, 200c und 200d zur Veranschaulichung der Vorgänge, die im Rahmen der Unterprogramm-Routinen 202, 206 und 208 zur Festlegung eines rechteckförmigen Bildausschnitts zur Selektion eines virtuellen Objekts 110' bzw. einer Gruppe solcher Objekte, zum Einstellen einer Ansicht mit gewünschter Detailstufe sowie zur Verschiebung eines rechteckförmigen Bildausschnitts der dargestellten virtuellen Szene 112' und der darin enthaltenen virtuellen Objekte 110' ablaufen.

Gemäß Schritt 202 werden zunächst Position und Größe eines rechteckförmigen Bildausschnitts der auf dem Bildschirm 116 dargestellten virtuellen Szene 112' zur Selektion eines virtuellen Objekts 110' bzw. einer Gruppe solcher Objekte durch Navigieren der Positionsmarke 110" in $\pm x$- und/oder $\pm y$-bzw. in $\pm\varphi_z$- und/oder $\pm\varphi_x$-Richtung zu zwei diagonal gegenüber liegenden Eckpunkten des zu betrachtenden Bildausschnitts und Bestätigen der Positionen dieser Eckpunkte durch Auslenken des Kraft-/Momentensensors 104 in $\pm z$- bzw. $\pm\varphi_y$-Richtung festgelegt. Bei Erfassung einer Auslenkung $\Delta x \neq 0$ und/oder $\Delta y \neq 0$ bzw. $\Delta\varphi_z \neq 0$ und/oder $\Delta\varphi_x \neq 0$ des Kraft-/Momentensensors 104 in Schritt 202a wird die Positionsmarke 110" nach Schritt 202b in $\pm x$- und/oder $\pm y$- bzw. $\pm \varphi_z$- und/oder $\pm \varphi_x$-Richtung durch die auf dem Bildschirm 116 dargestellte virtuelle Szene 112' navigiert, wobei Größe und Richtung der Versetzung aus Betrag und Vorzeichen der Auslenkung $\Delta x$ und/oder $\Delta y$ bzw. $\Delta\varphi_z$ und/oder $\Delta\varphi_x$ des Kraft-/Momentensensors 104 berechnet werden.

Nachdem in Schritt 202c eine weitere Auslenkung $\Delta z \neq 0$ bzw. $\Delta \varphi_y \neq 0$ des Kraft-/Momentensensors 104 detektiert wurde, erfolgt in Schritt 202d die Festlegung eines Eckpunkts eines zur Selektion eines virtuellen Objekts 110' oder einer Gruppe solcher Objekte benötigten rechteckförmigen Bildausschnitts der dargestellten virtuellen Szene 112'. Zur Festlegung eines weiteren, diagonal entgegengesetzt liegenden Eckpunktes ist eine weitere Navigationsoperation sowie eine weitere Selektionsoperation notwendig. Bei Erfassung einer Auslenkung $\Delta x \neq 0$ und/oder $\Delta y \neq 0$ bzw. $\Delta\varphi_z \neq 0$ und/oder $\Delta\varphi_x \neq 0$ des Kraft-/Momentensensors 104 in Schritt 202e wird die Positionsmarke 110" gemäß Schritt 202f in $\pm x$- und/oder $\pm y$-bzw. $\pm\varphi_z$- und/oder $\pm\varphi_x$-Richtung durch die auf dem Bildschirm 116 dargestellte virtuelle Szene 112' navigiert, wobei wieder Größe und Richtung der Versetzung aus Betrag und Vorzeichen der Auslenkung $\Delta x$ und/oder $\Delta y$ bzw. $\Delta\varphi_z$ und/oder $\Delta\varphi_x$ des Kraft-/Momentensensors 104 berechnet werden. Nachdem in Schritt 202g eine weitere Auslenkung $\Delta z \neq 0$ bzw. $\Delta\varphi_y \neq 0$ des Kraft-/Momentensensors 104 detektiert wurde, erfolgt in Schritt 202h die Festlegung eines weiteren Eckpunkts eines zur Selektion eines virtuellen Objekts 110' oder einer Gruppe derartiger Objekte benötigten rechteckförmigen Bildausschnitts der dargestellten virtuellen Szene 112'.

Wird in Schritt 204 eine erneute Auslenkung $\Delta z \neq 0$ bzw. $\Delta\varphi_y \neq 0$ des Kraft-/Momentensensors 104 erfasst, wird eine Unterprogramm-Routine 206 zum Öffnen/Schliessen von vorgegebenen (diskreten) Detailtiefenstufen $D_1$,..., $D_n$ aufgerufen

Abhängig von dem Vorzeichen der Auslenkung in dem entsprechenden Freiheitsgrad werden dabei im Sinne einer Geschwindigkeitssteuerung sukzessive in diskreten Schritten Ansichten mit höherer bzw. niedrigerer Detailstufe generiert, bis der entprechende Maximal- bzw. Minimalwert der Detailstufen errreicht ist. Sobald der Benutzer die Auslenkung in diesem Freiheitsgrad beendet, wird weiter die zuletzt gewählte "Auflösung" berücksichtigt.

Die Abläufe im Umfeld einer baumartigen Darstellung von Verzeichnissen werden nunmehr unter Zuhilfenahme der Fig. 2 erläutert.

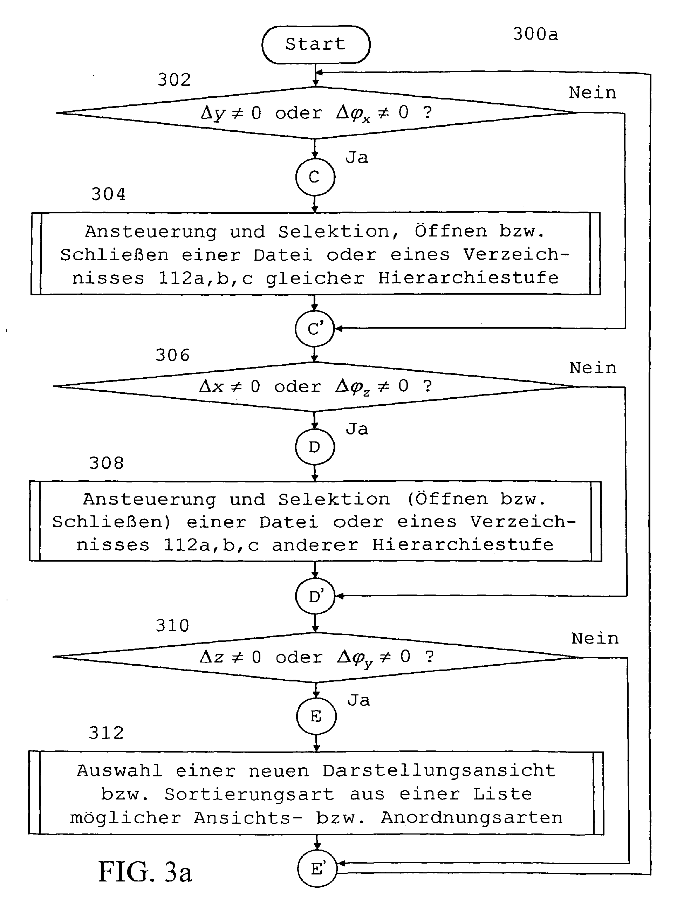

In Fig. 3a ist ein Flussdiagramm 300a zum Navigieren einer Positionsmarke 100" durch eine zweidimensionale Verzeichnisstruktur 112" und Selektieren darin enthaltener Verzeichnisse 112a,b,c bzw. Dateien mit Hilfe von Auslenkungen des Kraft-/Momentensensors 104 in verschiedenen translatorischen (x, y, z) und/oder rotatorischen Freiheitsgraden ($\varphi_x$, $\varphi_y$, $\varphi_z$) dargestellt.

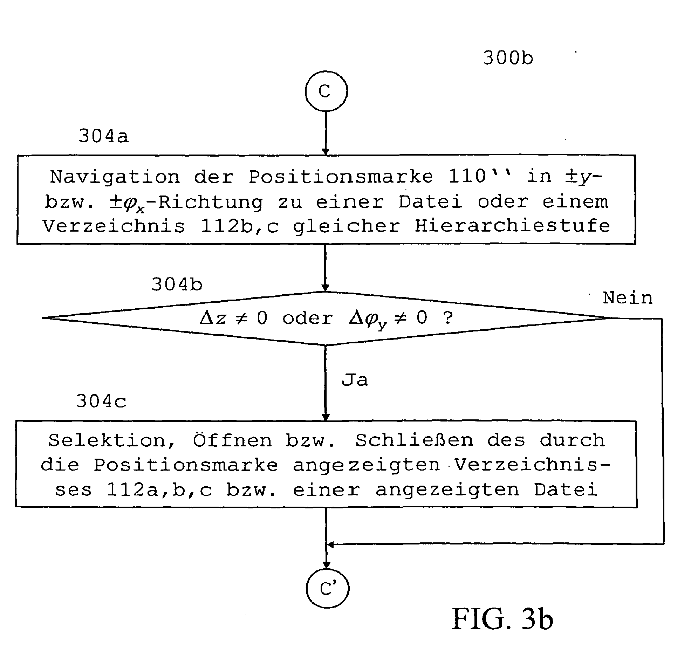

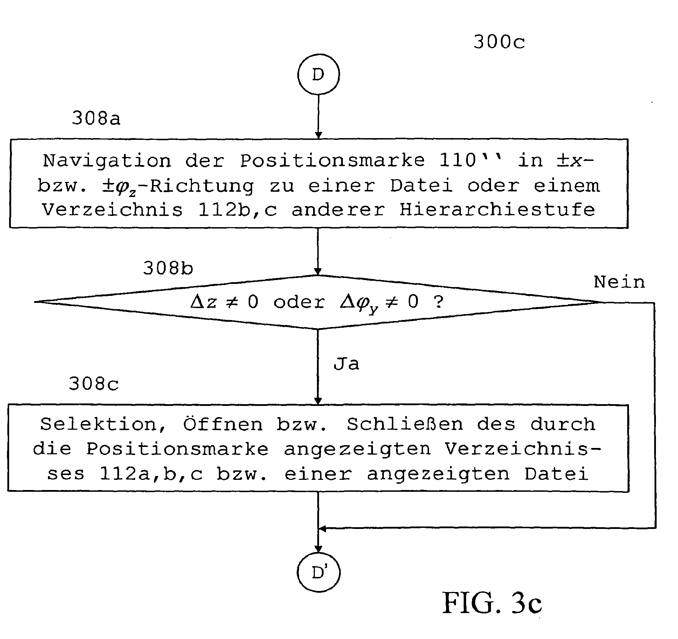

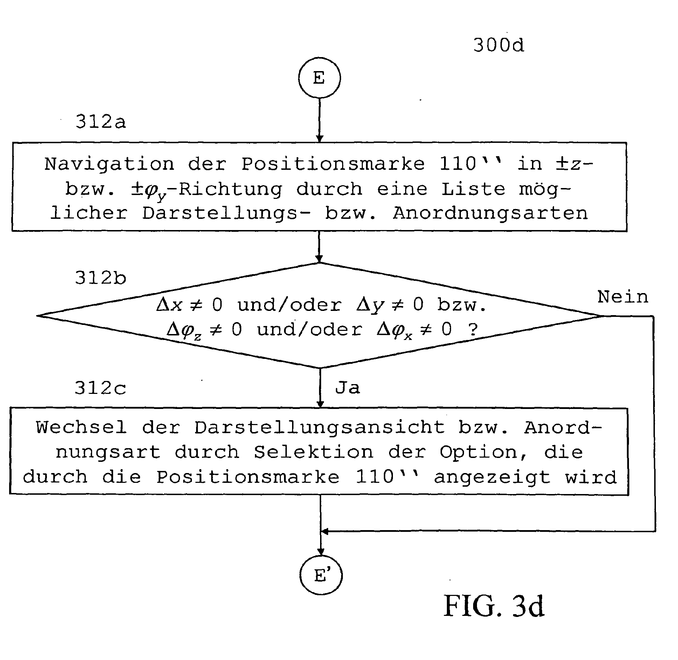

Fig. 3b, 3c bzw. 3d zeigen Flussdiagramme 300b, 300c und 300d zur Veranschaulichung der Vorgänge, die im Rahmen der Unterprogramm-Routinen 304, 308 und 312 zum Navigieren der Positionsmarke 110" zu einem Verzeichnis 112a,b,c bzw. zu einer Datei, das/die in der zweidimensionalen Verzeichnisstruktur 112" dieselbe, eine höhere oder niedrigere Hierarchiestufe als das zuletzt selektierte Verzeichnis 112a,b,c bzw. die zuletzt ausgewählte Datei hat, ablaufen. Außerdem werden die nötigen Vorgänge zum Navigieren der Positionsmarke 110" durch eine Liste möglicher Ansichts- bzw. Anordnungsarten sowie zum Wechseln der Darstellungsansicht bzw. Anordnung der im zweiten Teilfenster 113b der grafischen Benutzeroberfläche 113 dargestellten Unterverzeichnisse 112b,c bzw. Dateien dargestellt.

Bei Erfassung einer Auslenkung $\Delta y \neq 0$ bzw. $\Delta\varphi_x \neq 0$ des Kraft/Momentensensors 104 in Schritt 302 wird die Positionsmarke 110" gemäß Schritt 304a zu einem Verzeichnis 112a,b,c bzw. einer Datei navigiert, das/die in der zweidimensionalen Verzeichnisstruktur 112" dieselbe Hierarchiestufe wie das zuletzt selektierte Verzeichnis 112a,b,c bzw. die zuletzt selektierte Datei hat. Größe und Richtung der Versetzung werden dabei aus Betrag und Vorzeichen der Auslenkung $\Delta y$ bzw. $\Delta\varphi_x$ berechnet. Wird in Schritt 304b eine Auslenkung $\Delta z \neq 0$ bzw. $\Delta\varphi_y \neq 0$ des Kraft-/Momentensensors 104 detektiert, wird in Schritt 304c das durch die Positionsmarke 110" angezeigte Verzeichnis 112a,b,c bzw. die durch sie angezeigten Datei selektiert, geöffnet bzw. geschlossen, je nachdem, ob das betreffende Verzeichnis 112a,b,c bzw. die betreffende Datei vorher bereits geschlossen oder geöffnet war. Bei Erfassung einer Auslenkung $\Delta x \neq 0$ bzw. $\Delta\varphi_z \neq 0$ des Kraft-/Momentensensors 104 in Schritt 306 wird die Positionsmarke 110" gemäß Schritt 308a zu einem Verzeichnis 112a,b,c bzw. einer Datei navigiert, das/die in der zweidimensionalen Verzeichnisstruktur 112 " eine höhere oder niedrigere Hierarchiestufe als das zuletzt selektierte Verzeichnis 112a,b,c bzw. die zuletzt selektierte Datei hat. Größe und Richtung der Versetzung werden wieder aus Betrag und Vorzeichen der Auslenkung $\Delta x$ bzw. $\Delta\varphi_z$ berechnet. Wird in Schritt 308b eine Auslenkung $\Delta z \neq 0$ bzw. $\Delta\varphi_y \neq 0$ des Kraft/Momentensensors 104 detektiert, wird in Schritt 308c das durch die Positionsmarke 110" angezeigte Verzeichnis 112a,b,c bzw. die durch sie angezeigten Datei selektiert, geöffnet bzw. geschlossen, je nachdem, ob das betreffende Verzeichnis 112a,b,c bzw. die betreffende Datei vorher bereits geschlossen oder geöffnet war.

Schließlich wird bei Erfassung einer Auslenkung $\Delta z \neq 0$ bzw. $\Delta\varphi_y \neq 0$ des Kraft-/Momentensensors 104 in Schritt 310 die Positionsmarke 110" gemäß Schritt 312a durch eine Liste möglicher Ansichts- bzw. Anordnungsarten navigiert, in welcher verschiedene Möglichkeiten zur Sortierung der Verzeichnisse 112a,b,c und Dateien (z.B. nach Name, Typ, Größe bzw. Erstellungsdatum) vorgegeben sind. Wird in Schritt 312b eine Auslenkung $\Delta x \neq 0$, $\Delta y \neq 0$, $\Delta\varphi_z \neq 0$ bzw. $\Delta\varphi_x \neq 0$ des Kraft-/Momentensensors 104 detektiert, erfolgt gemäß Schritt 312c ein Wechsel der Darstellungsansicht bzw. Anordnung der im zweiten Teilfenster 113b der grafischen Benutzeroberfläche 113 dargestellten Unterverzeichnisse 112b,c bzw. Dateien, die in dem momentan selektierten Verzeichnis 112a,b,c enthalten sind.

Ein Vorteil der Anwendung der Erfindung auf Verzeichnis-Darstellungen besteht also darin, dass störende Nachgreifbewegungen der Arbeitshand zum Neuansetzen des Eingabe-, Steuer- und Manipulationsgeräts, welche z. B. beim Scrollen eines Scrollbalkens bzw. beim Steuern virtueller Objekte mit einer konventionellen 2D-Maus im Falle von Platzmangel auf der zur Verfügung stehenden Arbeitsfläche typischerweise auftreten, entfallen.

**Patentansprüche**

1. Verfahren zur Ansteuerung eines Recheneinheit (114) mit einer Anzeigeeinheit (116), auf der Objekte (110') in einer von mehreren diskreten Detailtiefenstufen ($D_1$,..., $D_n$) der Darstellung angezeigt werden, aufweisend die folgenden Schritte:

   - Erzeugen von Ansteuersignalen durch ein Eingabegerät (102) mit wenigstens drei Freiheitsgraden (x, y, z, $\varphi_x$, $\varphi_y$, $\varphi_z$) ,
   - Auswerten von Ansteuersignalen in mindestens einem Freiheitsgrad (x, y, z, $\varphi_x$, $\varphi_y$ , $\varphi_z$) zur Navigation einer Marke (110") oder eines Objekts (110') auf der Anzeigeeinheit (116) und
   - Auswerten eines dritten Freiheitsgrads (x, y, z, $\varphi_x$, $\varphi_y$, $\varphi_z$) zur Wahl einer der mehreren diskreten Detailtiefenstufen ($D_1$ ,..., $D_n$).

2. Verfahren nach Anspruch 1,
   **dadurch gekennzeichnet,**
   **dass** ein weiterer Freiheitsgrad (x, y, z, ($\varphi_x$, $\varphi_y$, $\varphi_z$) des Eingabegeräts (102) Ansteuersignale erzeugt, die zur wahlweisen Aktivierung bzw. Deaktivierung eines Objekts (110') auf der Anzeigeeinheit (116) ausgewertet werden.

3. Verfahren nach Anspruch 1 oder 2,
   **dadurch gekennzeichnet,**
   **dass** auf der Anzeigeeinheit (116) CAD-Objekte (110') angezeigt werden.

4. Verfahren nach einem der Ansprüche 1 bis 3,
   **dadurch gekennzeichnet, dass**
   durch Auslenkung des Bedienteils (104) in einem bestimmten Freiheitsgrad oder einer Kombination vorher festgelegter Freiheitsgrade ($\Delta x$, $\Delta y$, $\Delta z$, $\Delta\varphi_x$, $\Delta\varphi_y$, $\Delta\varphi_z$) ein Kontrollfenster einer mit Hilfe der Anzeigevorrichtung (116) dargestellten grafischen Benutzeroberfläche (113) mit mindestens einer virtuellen Schaltfläche zur Änderung von Einstellungen des Eingabe-, Steuer- und/oder Manipulationsgeräts (102) geöffnet wird, die durch Auslenkung des Bedienteils (104) in mindestens einem weiteren Freiheitsgrad oder einer Kombination weiterer, vorher festgelegter Freiheitsgrade ($\Delta x$, $\Delta y$, $\Delta z$, $\Delta\varphi_x$, $\Delta\varphi_y$, $\Delta\varphi_z$) bedienbar ist.

5. Verfahren zur Ansteuerung einer Recheneinheit (114) mit einer Anzeigeeinheit (116), auf der Verzeichnisse (112a, b,c) und/oder Dateien einer baumförmig aufgebauten Verzeichnisstruktur (112'') mit mehreren Hierarchiestufen angezeigt werden, wobei die jeweils angezeigte Verzeichnisebene (112a,b,c) bzw. Datei wählbar ist, aufweisend die folgenden Schritte:

   - Erzeugen von Ansteuersignalen durch ein Eingabegerät (102) mit wenigstens drei Freiheitsgraden ($x$, $y$, $z$, $\varphi_x$, $\varphi_y$, $\varphi_z$),
   - Auswerten von Ansteuersignalen zur Navigation einer Marke (110'') oder eines Objekts (110') in der Verzeichnis-Baumstruktur (112'') und
   - Auswerten eines dritten Freiheitsgrades ($x$, $y$, $z$, $\varphi_x$, $\varphi_y$, $\varphi_z$) zum wahlweisen Öffnen bzw. Schließen von diskreten Verzeichnisebenen (112a,b,c) bzw. Dateien.

6. Verfahren nach Anspruch 5,
   **dadurch gekennzeichnet,**
   **dass** die Öffnungstiefe der Verzeichnisstruktur eine Funktion des Abstands eines Verzeichnisses von einem durch das Eingabegerät gewählten Fokus ist.

7. Verfahren nach Anspruch 5 oder 6,
   **dadurch gekennzeichnet,**
   **dass** ein weiterer Freiheitsgrad ($x$, $y$, $z$, $\varphi_x$, $\varphi_y$, $\varphi_z$) des Eingabegeräts (102) zur Erzeugung eines Ansteuersignals ausgewertet wird, das zum wahlweisen Aktivieren bzw. Deaktivieren von Objekten (110') auf der Anzeigeeinheit (116) ausgewertet wird.

8. Verfahren nach einem der Ansprüche 5 bis 7, wobei

   - die Verzeichnisstruktur (112'') in einem ersten Teilfenster (113a) einer grafischen Benutzeroberfläche (113) dargestellt wird,
   - die in einem selektierten Verzeichnis (112a,b,c) enthaltenen Unterverzeichnisse (112b,c) und/oder Dateien in einem zweiten Teilfenster (113b) der grafischen Benutzeroberfläche (113) angezeigt werden und durch grafische Symbole, Namen, Typbezeichnungen, Größe und/oder Erstellungsdatum eindeutig identifizierbar und sortierbar sind,

   **gekennzeichnet durch**
   einen Wechsel der Darstellungsansicht und/oder Anordnung der im zweiten Teilfenster (113b) angezeigten Unterverzeichnisse (112b,c) und/oder Dateien hinsichtlich ihres Namens, ihres Typs, ihrer Größe bzw. ihres Erstellungsdatums **durch** eine erste Auslenkung des Bedienelements (104) in einem ersten, geeignet festgelegten Freiheitsgrad ($\Delta x$, $\Delta y$, $\Delta z$, $\Delta\varphi_x$, $\Delta\varphi_y$, $\Delta\varphi_z$) zur Navigation **durch** eine Liste möglicher Ansichts- bzw. Anordnungsarten und eine zweite Auslenkung des Bedienelements (104) in einem anderen, geeignet festgelegten Freiheitsgrad ($\Delta x$, $\Delta y$, $\Delta z$, $\Delta\varphi_x$, $\Delta\varphi_y$, $\Delta\varphi_z$) zur Selektion einer bestimmten Ansichts- bzw. Anordnungsart.

9. Manuell zu betätigendes Bedienteil eines Eingabe-, Steuerund/oder Manipulationsgeräts (102), welches in mindestens drei verschiedenen translatorischen und/oder rotatorischen Freiheitsgraden ($\Delta x$, $\Delta y$, $\Delta z$, $\Delta\varphi_x$, $\Delta\varphi_y$, $\Delta\varphi_z$) auslenkbar ist, **gekennzeichnet durch**

Mittel zur Realisierung eines Verfahrens nach einem der Ansprüche 1 bis 8.

10. Computersoftware-Programmprodukt,
   **dadurch gekennzeichnet,**
   **dass** es ein Verfahren nach einem der vorhergehenden Ansprüche implementiert, wenn es auf einer Recheneinheit (114) mit Anzeigeeinheit (116) läuft.

11. System, aufweisend

   - eine Recheneinheit (114),
   - eine damit verbundene Anzeigeeinheit (116) und
   - ein in mindestens in zwei Freiheitsgraden ($x$, $y$, $z$, $\varphi_x$, $\varphi_y$, $\varphi_z$) auslenkbares Eingabegerät (102), das mit der Recheneinheit (114) verbunden ist,

   **dadurch gekennzeichnet,**
   **dass** die Recheneinheit (114) zur Ausführung eines Verfahrens nach einem der Ansprüche 1 bis 8 programmiert ist.

EP 1 484 666 A2

112a    112c    100a

📁 Dokumente und Einstellungen                    — □ X
Datei Bearbeiten Ansicht Favoriten Extras   ?
← Zurück ▾ → ▾ |   | 🔍 Suchen | 📁 Ordner
Adresse 📁 Dokumente und Einstellungen          ▾ wechseln zu

Ordner
  📁 DELL
112b  📁 DISCOVER
  📁 Dokumente und Einstellungen
  📁 DRIVERS
113  📁 I386
  📁 My Musik
  📁 PACEMOBI
  📁 Palm
  📁 Programm Files
  📁 Programme
113a    📁 3Dconnexion
    📁 Adaptec
    📁 Adobe
    📁 aod
    📁 Autodesk
    📁 ComPlusApplications
    📁 CosmoSoftware
    📁 DassaultSystemes
    📁 DELL
Objekte              Byte           📁 Arbeitsplatz

Dokumente und Einstellungen

Markieren Sie ein Objekt,
um seine Beschreibung
anzuzeigen

Siehe auch:
Eigene Dateien

Netzwerkumgebung

Arbeitsplatz

📁 📁 Administrator  AllUsers

📁 Axel

110"    113b

112c    112"

116    114

118

X

102

Scroll

Schliessen    Öffnen

Gauss-Zoom

108    106a    106
106a    4
      3   8
106a  *   7
      6
      2
106a  1   5

102

106

Ausschnittvergrößerung: X

104

106

$z, \dot{z}, \ddot{z}$
$\varphi_z, \dot{\varphi}_z, \ddot{\varphi}_z,$

$y, \dot{y}, \ddot{y}$
$\varphi_y, \dot{\varphi}_y, \ddot{\varphi}_y,$

$x, \dot{x}, \ddot{x}$
$\varphi_x, \dot{\varphi}_x, \ddot{\varphi}_x,$

Fig. 1

Start   200a

A

202

Selektion eines virtuellen Objekts 110' bzw.
Festlegung von Position und Größe eines
rechteckförmigen Bildausschnittes zwecks
Selektion einer Gruppe dieser Objekte 110'

A'

204

$\Delta z \neq 0$ oder $\Delta \varphi_y \neq 0$ ?   Nein

Ja

B

206

Auswahl einer diskreten Detailtiefenstufe
aus einer Zoomfaktorenliste zur Maßstabsskalierung des Objekts bzw. Bildausschnittes

B'

207

Bearbeitung (Manipulation) des selektierten
Objekts bzw. der durch den Bildausschnitt
selektierten Gruppe virtueller Objekte

B''

208

Navigation des Einzelobjekts bzw. der durch
den Bildausschnitt selektierten Objekte und
Festlegung einer neuen Objektposition

FIG. 2a   B'''

200b

A

202a
$\Delta x \neq 0$ und/oder $\Delta y \neq 0$ bzw.
$\Delta \varphi_z \neq 0$ und/oder $\Delta \varphi_x \neq 0$ ?
Nein

Ja

202b
Navigation der Positionsmarke 110'' in $\pm x$-
und/oder $\pm y$-, $\pm \varphi_z$- und/oder $\pm \varphi_x$-Richtung

202c
$\Delta z \neq 0$ bzw. $\Delta \varphi_y \neq 0$ ?
Nein

Ja

202d
Festlegung eines ersten Eckpunktes des
rechteckförmigen Bildausschnittes

202e
$\Delta x \neq 0$ und/oder $\Delta y \neq 0$ bzw.
$\Delta \varphi_z \neq 0$ und/oder $\Delta \varphi_x \neq 0$ ?
Nein

Ja

202f
Navigation der Positionsmarke 110'' in $\pm x$-
und/oder $\pm y$-, $\pm \varphi_z$- und/oder $\pm \varphi_x$-Richtung

202g
$\Delta z \neq 0$ bzw. $\Delta \varphi_y \neq 0$ ?
Nein

Ja

202h
Festlegung eines zweiten, diagonal entgegengesetzten Eckpunktes des Bildausschnittes

A'

FIG. 2b

200c

( B )

206a

Navigation der Positionsmarke 110'' in ±z-
bzw. ±$\varphi_y$-Richtung durch die Zoomfaktorenliste

206b

$\Delta x \neq 0$ und/oder $\Delta y \neq 0$ bzw.
$\Delta \varphi_z \neq 0$ und/oder $\Delta \varphi_x \neq 0$ ?

Nein

( A' )

Ja

206c

Selektion einer diskreten Detailtiefenstufe
aus der Zoomfaktorenliste zur Maßstabsskalierung des Objekts 110' bzw. Bildausschnittes

( B' )

FIG. 2c

B''          200d

208a

$\Delta x \neq 0$ und/oder $\Delta y \neq 0$ bzw.
$\Delta\varphi_z \neq 0$ und/oder $\Delta\varphi_x \neq 0$ ?

Nein

Ja

208b

Navigation der Positionsmarke 110'' in $\pm x$-
und/oder $\pm y$-, $\pm\varphi_z$- und/oder $\pm\varphi_x$-Richtung

208c

$\Delta z \neq 0$ bzw. $\Delta\varphi_y \neq 0$ ?

Nein

Ja

208d

Festlegung der neuen Position des Einzelobjekts 110' bzw. des Bildausschnittes und der
durch ihn selektierten virtuellen Objekte 110'

B'''

FIG. 2d

300a

Start

302

$\Delta y \neq 0$ oder $\Delta\varphi_x \neq 0$ ?

Nein

Ja

C

304

Ansteuerung und Selektion, Öffnen bzw. Schließen einer Datei oder eines Verzeichnisses 112a,b,c gleicher Hierarchiestufe

C'

306

$\Delta x \neq 0$ oder $\Delta\varphi_z \neq 0$ ?

Nein

Ja

D

308

Ansteuerung und Selektion (Öffnen bzw. Schließen) einer Datei oder eines Verzeichnisses 112a,b,c anderer Hierarchiestufe

D'

310

$\Delta z \neq 0$ oder $\Delta\varphi_y \neq 0$ ?

Nein

Ja

E

312

Auswahl einer neuen Darstellungsansicht bzw. Sortierungsart aus einer Liste möglicher Ansichts- bzw. Anordnungsarten

FIG. 3a

E'

300b

C

304a

Navigation der Positionsmarke 110'' in $\pm y$-
bzw. $\pm\varphi_x$-Richtung zu einer Datei oder einem
Verzeichnis 112b,c gleicher Hierarchiestufe

304b

$\Delta z \neq 0$ oder $\Delta\varphi_y \neq 0$ ?     Nein

Ja

304c

Selektion, Öffnen bzw. Schließen des durch
die Positionsmarke angezeigten Verzeichnisses 112a,b,c bzw. einer angezeigten Datei

C'

FIG. 3b

300c

D

308a

Navigation der Positionsmarke 110'' in $\pm x$-
bzw. $\pm\varphi_z$-Richtung zu einer Datei oder einem
Verzeichnis 112b,c anderer Hierarchiestufe

308b

$\Delta z \neq 0$ oder $\Delta\varphi_y \neq 0$ ?

Nein

Ja

308c

Selektion, Öffnen bzw. Schließen des durch
die Positionsmarke angezeigten Verzeichnisses 112a,b,c bzw. einer angezeigten Datei

D'

FIG. 3c

300d

E

312a

Navigation der Positionsmarke 110'' in ±z-
bzw. ±$\varphi_y$-Richtung durch eine Liste möglicher Darstellungs- bzw. Anordnungsarten

312b

$\Delta x \neq 0$ und/oder $\Delta y \neq 0$ bzw.
$\Delta\varphi_z \neq 0$ und/oder $\Delta\varphi_x \neq 0$ ?

Nein

312c          Ja

Wechsel der Darstellungsansicht bzw. Anordnungsart durch Selektion der Option, die
durch die Positionsmarke 110'' angezeigt wird

E'

FIG. 3d